# EUROPEAN PATENT APPLICATION

(11) **EP 3 403 917 A1**
(43) Date of publication of application: **21.11.2018**
(21) Application number: 17171830.7
(22) Date of filing: 18.05.2017
(51) Int. Cl.: B64C 1/14

(54) **DOOR ASSEMBLY FOR A VEHICLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A door assembly for a vehicle, the door assembly comprising: a door (102); a stiffening structure (202) fixed to a surface of the door, the stiffening structure comprising a first wall spaced apart from and substantially parallel to the surface of the door, and first side walls extending between the first wall and the surface of the door; and a hinge member (106) comprising a base portion and a hinge arm extending from the base portion; wherein the base portion comprises a second wall and second side walls extending from the second wall, the second wall and second side walls defining a volume; at least a part of the stiffening structure is located in the volume; and outer surfaces of the first side walls are bonded to internal surfaces of the second side walls.

## Description

### FIELD OF THE INVENTION

The present invention relates to door assemblies for vehicles and the fabrication thereof.

### BACKGROUND

Conventionally, many structural components of aircraft are fabricated by individually making elements of those components, and subsequently assembling them into the final component using mechanical fasteners. For example, in an aircraft bay door assembly, an aircraft bay door may be fixed to a hinge mechanism using mechanical fasteners. The hinge may be further attached to an aircraft substructure or fuselage using mechanical fasteners.

Such use of mechanical fasteners tends to necessitate drilling and countersinking holes, reaming and cleaning holes, and installing mechanical fasteners. Furthermore, the use of mechanical fasteners tends to necessitate labour-intensive manufacturing, adds mass, and inhibits homogeneity of mating surfaces.

Adhesive bonding methods have been employed in certain applications.

### SUMMARY OF THE INVENTION

In a first aspect, the present invention provides a door assembly for a vehicle. The door assembly comprises: a door; a stiffening structure fixed to a surface of the door, the stiffening structure comprising a first wall spaced apart from and substantially parallel to the surface of the door, and first side walls extending between the first wall and the surface of the door; and a hinge member comprising a base portion and a hinge arm extending from the base portion. The base portion comprises a second wall and second side walls extending from the second wall, the second wall and second side walls defining a volume. At least a part of the stiffening structure is located in the volume. Outer surfaces of the first side walls are bonded to internal surfaces of the second side walls.

At least a part of the stiffening structure may be substantially the same size and shape as the volume in which it is located. An outer surface of the first walls may be bonded to an internal surface of the second wall. The first side walls of the stiffening structure may taper outwards from the first wall to the surface of the door. The second side walls may taper outwards from the second wall to their distal edges opposite to the second wall.

The stiffening structure may comprise a plurality of connected stiffening elements oriented in multiple different directions. The at least a part of the stiffening structure that is located in the volume may comprise a plurality of the stiffening elements oriented in multiple different directions. The second wall may have a shape selected from the group of shapes consisting of: a H-shape, a I-shape a C-shape, a S-shape, a J-shape, a L-shape, a T-shape, a U-shape, a F-shape, and a X-shape.

The stiffening structure may comprise a thermoplastic fibre-reinforced composite material. The stiffening structure comprises a short fibre-reinforced composite material comprising short fibres embedded in a polymer matrix, the short fibres having lengths of less than or equal to 50mm.

The internal surface of a second side wall and/or an internal surface of the second wall may comprise one or more protrusions that extend into the stiffening structure. Each of the one or more protrusions may have a length of less than or equal to 2mm, for example less than or equal to 1 mm.

The hinge member may be a metal or alloy hinge member. The hinge member may have been produced using an Additive Manufacturing process.

The vehicle may be an aircraft and the door may be an aircraft door.

In a further aspect, the present invention provides a vehicle (e.g. an aircraft) comprising a door assembly according to any preceding aspect.

In a further aspect, the present invention provides a method for fabricating a door assembly for a vehicle. The method comprises: providing a stiffening structure, the stiffening structure comprising a first wall and first side walls extending from the first wall; providing a hinge member comprising a base portion and a hinge arm extending from the base portion, the base portion comprising a second wall and second side walls extending from the second wall, the second wall and second side walls defining a volume; locating at least a part of the stiffening structure in the volume; bonding outer surfaces of the first side walls to internal surfaces of the second side walls; and fixing the stiffening structure to a surface of the door such that the first wall is spaced apart from and substantially parallel to the surface of the door, and first side walls extend between the first wall and the surface of the door.

### BRIEF DESCRIPTION OF THE DRAWINGS

Figure 1 is a schematic illustration of an example aircraft;
Figure 2 is a schematic illustration of a perspective view of an aircraft door assembly of the aircraft;
Figure 3 is a schematic illustration of a plan view of the aircraft door assembly;
Figure 4 is a schematic illustration of a side view cross section of the aircraft door assembly at a hinge position;
Figure 5 is a schematic illustration of a bottom view of a first member of a hinge assembly;
Figure 6 is a schematic illustration of a side view of the first member;
Figure 7 is a schematic illustration of a plan view of the first member;
Figure 8 is schematic illustration of a portion of a bond surface of the first member;
Figure 9 is a process flow chart showing certain steps of process of producing the aircraft door assembly;
Figure 10 is a schematic illustration of a stage of the aircraft door assembly process;
Figure 11 is a schematic illustration of a stage of the aircraft door assembly process;
Figure 12 is a schematic illustration (not to scale) showing further details of a fastenerless join structure between the stiffening structure and the first member;
Figure 13 is a schematic illustration of a yet further stage of the aircraft door assembly process;
Figure 14 is a process flow chart showing certain steps of a process of producing the aircraft door stiffening structure;
Figure 15 is a schematic illustration of a stiffening structure mould moulding the aircraft door stiffening structure; and
Figure 16 is a schematic illustration of a further fastenerless join structure.

### DETAILED DESCRIPTION

It will be appreciated that relative terms such as horizontal and vertical, top and bottom, above and below, front and back, and so on, are used below merely for ease of reference to the Figures, and these terms are not limiting as such, and any two differing directions or positions and so on may be implemented rather than truly horizontal and vertical, top and bottom, and so on.

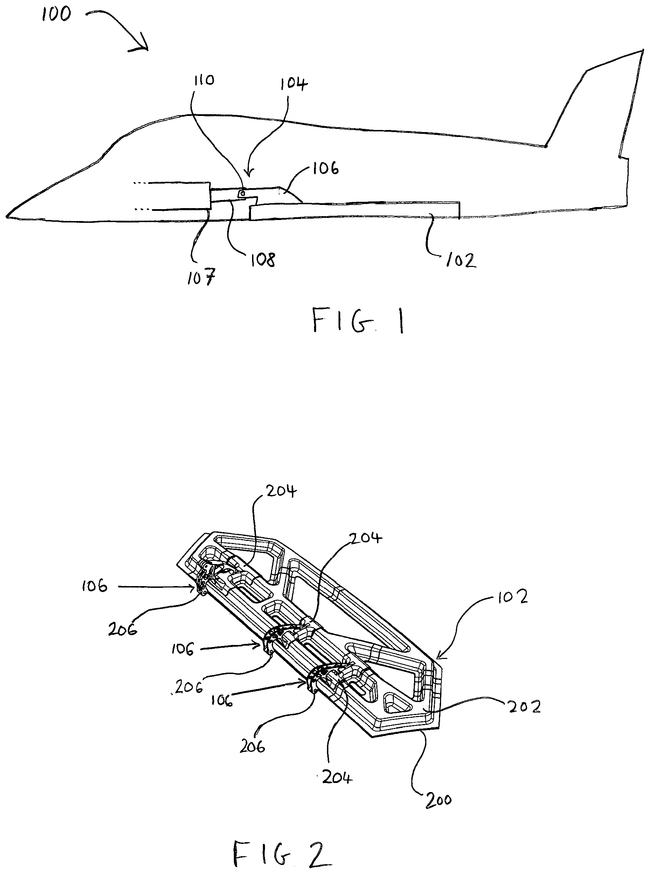

Figure 1 is a schematic illustration (not to scale) of an aircraft 100 in which an embodiment of a fastenerless join structure is implemented. The term "fastenerless" is used here to refer to a join in which two or more elements are fixed (i.e. attached) together without the use of mechanical fasteners including, but not limited to, bolts, screws, nails, clamps, and rivets.

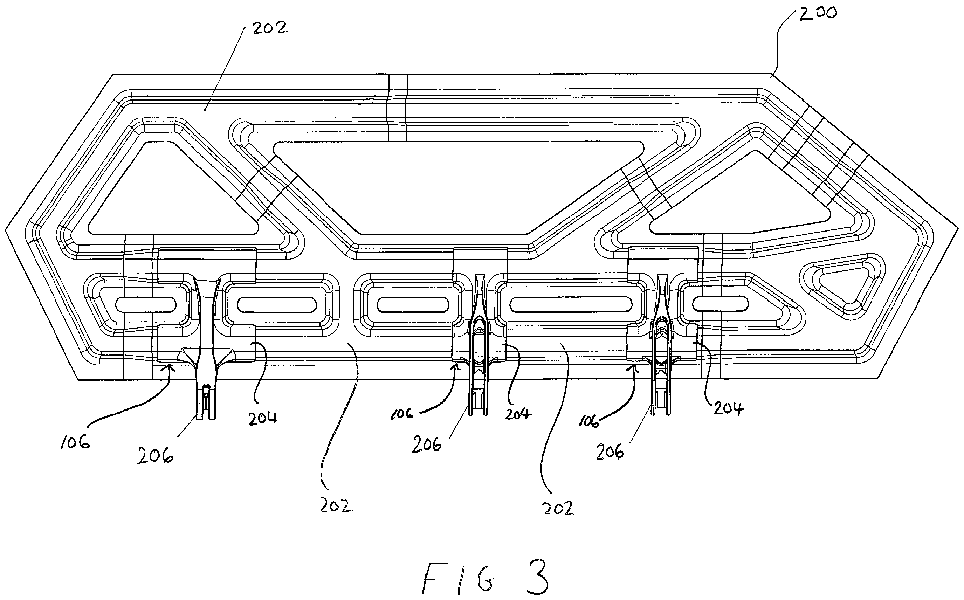

The aircraft 100 comprises an aircraft door 102 secured, by a hinge assembly 104, to an aircraft fuselage 107. Although only a single hinge assembly 104 is illustrated in Figure 1 for ease of depiction, in this embodiment, the aircraft door 102 is attached to the fuselage 107 by multiple hinge assemblies 104. In particular, in this embodiment, the aircraft door 102 is attached to the fuselage 107 by three hinge assemblies 104, as shown in Figures 2 and 3, which are described in more detail later below.

The hinge assemblies 104 enable the aircraft door 102 to be opened and closed, i.e. to be moved out of and into an opening formed in the fuselage 107. The aircraft door 102 may be opened and closed via any suitable actuation means (not shown).

In this embodiment, each hinge assembly 104 comprises a respective first member 106 and a second member 108 pivotally attached to the first member 106 via a pivot shaft 110. The first member 106 of each hinge assembly 104 is fixedly attached to the aircraft door 102 at a fastenerless join structure. This fastenerless join structure and its fabrication will be described in more detail later below. The second member 108 of each hinge assembly 104 is fixedly attached to the aircraft fuselage 107 by any appropriate fastening means, for example using one or more mechanical fasteners, welding, adhesive bonding, and/or using the below described fastenerless join structure.

Figure 2 is a schematic illustration (not to scale) showing further details of the aircraft door 102 and first members 106 of the multiple hinge assemblies 104 attached thereto. Figure 2 shows a perspective view of the aircraft door 102 and the first members 106 attached thereto.

Figure 3 is a schematic illustration (not to scale) of a plan view of the aircraft door 102 and first members 106 attached thereto.

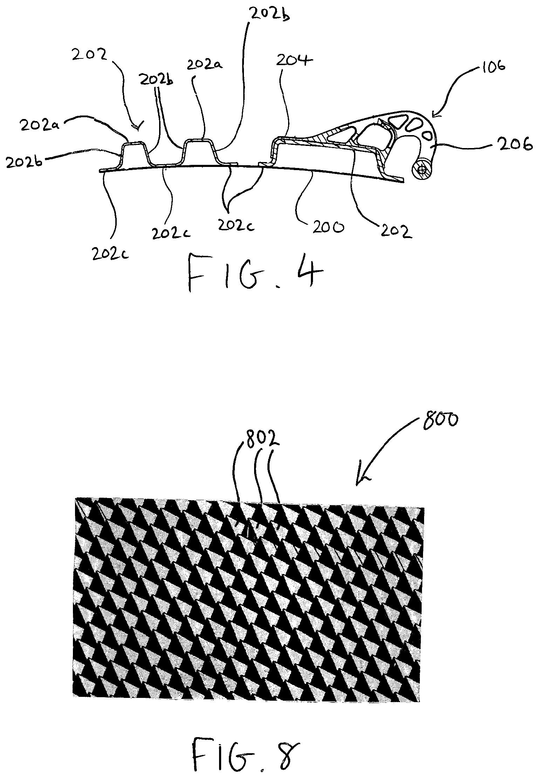

Figure 4 is a schematic illustration (not to scale) of a side view cross section of the aircraft door 102 a first member 106 attached thereto.

In this embodiment, the aircraft door 102 comprises a door panel 200 and a stiffening structure 202.

The door panel 200 is made of a composite material, in particular a continuous carbon fibre-reinforced thermoplastic composite. The continuous fibre-reinforced thermoplastic composite material is a composite material that comprises (e.g. high-performance or aerospace grade) continuous carbon fibres that are embedded in a matrix of thermoplastic(s), such as a polyaryletherketone (PAEK), for example polyetheretherketone (PEEK). The terminology "long fibres" and "continuous fibres" is used herein to refer to long fibres having a length of more than about 50mm, e.g. more than about 60mm, more than about 80mm, or more than about 100mm. Long fibres may, for example, have a general aspect ratio (defined as the ratio of fibre length to diameter) of greater than or equal to about 200, for example between about 200 and 500, e.g. about 200, 300, 400, or 500.

The lower surface of the door panel 200 is an external surface of the aircraft door 102 and conforms to an outer mould line (OML) of the aircraft 100. The upper surface of the door panel 200, which is opposite to the lower surface of the door panel 200, is an interior surface of the aircraft door 102.

The stiffening structure 202 is made of a composite material. Preferably, the stiffening structure is made of a carbon fibre composite (CFC) having the same thermoplastic polymer as the composite material from which the door panel 200 is made. In this embodiment, the stiffening structure 202 is made of a short carbon fibre-reinforced thermoplastic composite. The short fibre-reinforced thermoplastic composite material is a composite material that comprises short or "discontinuous" carbon fibres that are embedded in a matrix of thermoplastics, such as a polyaryletherketone (PAEK), for example polyetheretherketone (PEEK). The terminology "short fibres" and "discontinuous fibres" is used herein to refer to short fibres having a length of less than or equal to about 50mm, e.g. less than or equal to about 40mm, less than or equal to about 30mm, less than or equal to about 20mm, less than or equal to about 10mm, or more preferably less than or equal to about 5mm. Short fibres may, for example, have a general aspect ratio of less than or equal to about 100, for example less than or equal to about 60, e.g. between about 20 and 60, e.g. about 20, 30, 40, 50 or 60.

The stiffening structure 202 is fixedly attached to the upper surface of the door panel 200, i.e. to the interior surface of the door panel 200. The stiffening structure 202 comprises a plurality of connected longitudinal and transverse stiffening elements arranged on the upper surface of the door panel 200. The stiffening elements of the stiffening structure 202 are arranged to form a frame on the upper surface of the door panel 200 along the edges of the upper surface of the door panel 200, and to form crossbeams connected between opposite sides of the frame.

As shown in Figure 4, the stiffening structure 202 comprises a top surface 202a, side walls 202b, and flange 202c. The flange 202c is disposed against and fixedly attached to the upper surface of the door panel 200. The side walls 202b extend upwardly from the flange 202c to the top surface 202a, thereby spacing apart the upper surface of the door panel 200 and the top surface 202a. The side walls 202b are tapered such that a distance between the side walls 202b at and proximate to the flange 202c is greater than a distance between the side walls 202b at and proximate to the top surface 202a. In other words, the side walls 202b taper inwards from the flange 202c to the top surface 202a.

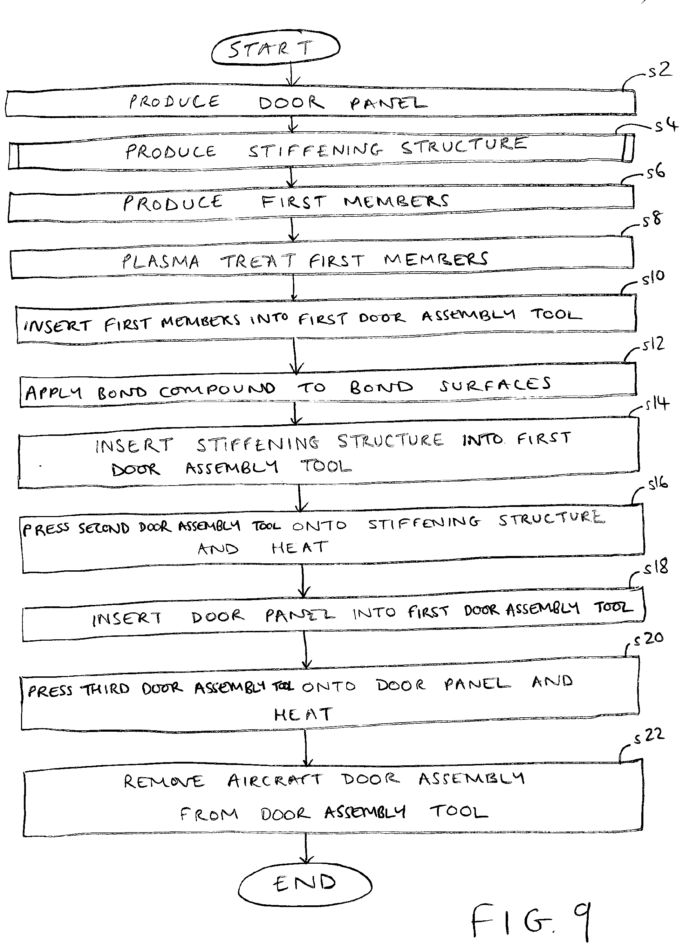

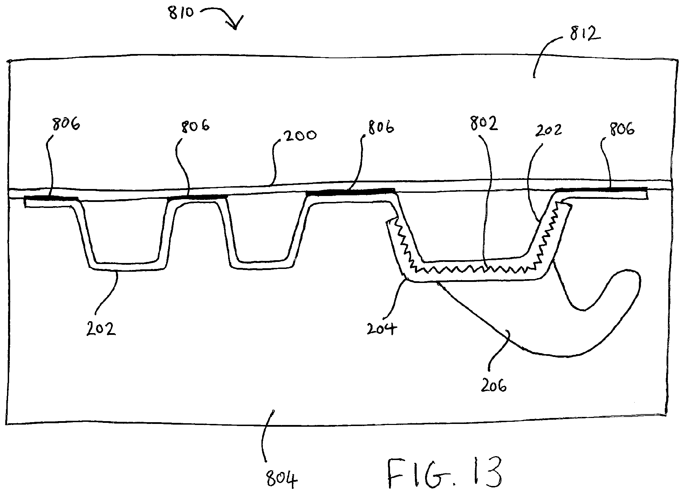

The stiffening structure 202, its construction, and its attachment to the door panel 200 are described in more detail later below with reference to Figures 9 and 13.

The first members 106 are joined or fixed to the stiffening structure 202, without the use of mechanical fasteners, such as bolts or rivets. Thus, the fixed together first members 106 and the stiffening structure 202 may be considered to be fastenerless join structures. The fastenerless joining or attachment of the first members 106 to the stiffening structure 202 will be described in more detail later below with reference to Figure 9.

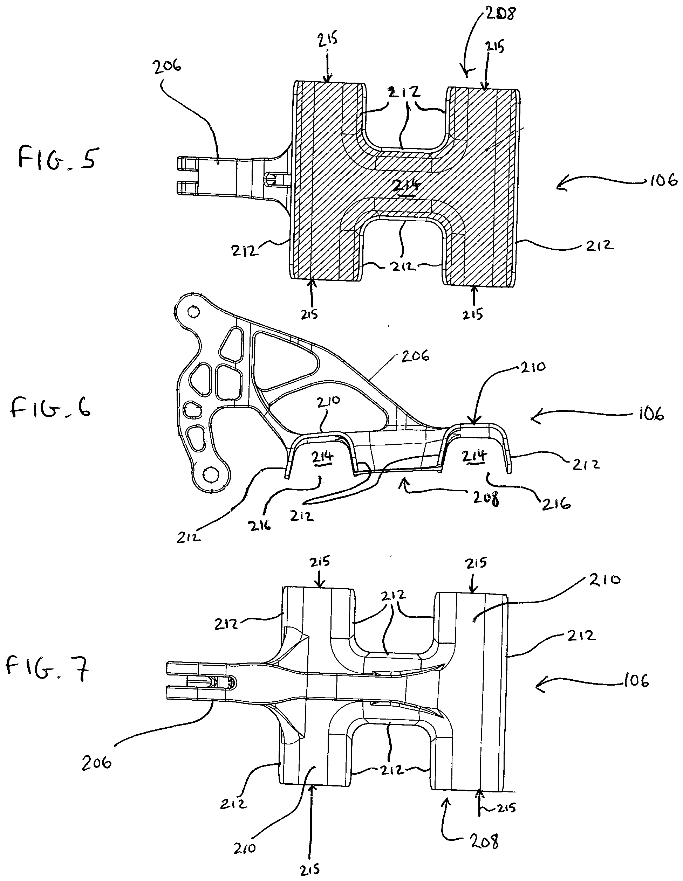

Further details of the first members 106 will now be described with reference to Figures 5-8, where Figure 5 is a schematic illustration (not to scale) showing a bottom view of a first member 106, Figure 6 is a schematic illustration (not to scale) showing a side view of the first member 106, and Figure 7 is a schematic illustration (not to scale) showing a plan view (i.e. top view) of the first member 106.

In this embodiment, the first member 106 is a single monolithic piece. The first member 106 is made of a titanium alloy, for example, Ti-6Al-4V. The first member 106 comprises a base portion 204 and a hinge arm 206.

The base portion 204 is a substantially H-shaped or I-shaped member when viewed in plan view (as in Figures 3 and 7).

The base portion 204 comprises a substantially H-shaped (or I-shaped) top wall 210, and side walls 212 extending therefrom. The hinge arm 206 extends from a top surface of the top wall 210. The top wall 210 and side walls 212 define a volume 214. The side walls 212 extend downwards from the all of the edges of the H-shaped top wall 210, except the edges at the ends of the arms of the H-shaped top wall 210. Thus, the volume 214 has side openings 215, as indicated by arrows in Figures 5 and 7. The volume 214 has a bottom opening 216 (indicated in Figure 6) which is defined by the distal edges of the side walls 212, i.e. the lower edges of the side walls 212 opposite to the upper edges of the side walls that are connected to the top wall 210. In this embodiment, the side walls 212 taper outwards from the top surface 210 to the opening 216, such that the opening 216 is larger in cross-section than the top wall 210.

In this embodiment, the base portion 204 is complementary to the portion of the stiffening structure 202 to which it is fixed. In other words, the shape of the volume 214 defined by the top and side walls 210, 212 is substantially the same as that of the part of the stiffening structure 202 to which the first member 106 is attached. Thus, when the first member 106 is fixed onto the stiffening structure 202 (e.g. as shown in Figures 2-4), the stiffening structure fits snugly into the volume 214 defined by the top and side walls 210, 212 of the base portion 204, such that the stiffening structure 202 contacts the internal surfaces of the top and side walls 212, 214.

In this embodiment, the internal surfaces of the top and side walls 210, 212 are surfaces that are bonded (joined securely) to the stiffening structure 202 and are, therefore, hereinafter referred to as "bond surfaces". These bond surfaces (which are indicated by hatching in Figure 5) are uneven or textured surfaces.

Figure 8 is schematic illustration (not to scale) showing further details of part of such a bond surface 800, i.e. an interior surface of the top and/or side walls 210, 212.

In this embodiment, the bond surface 800 comprises a plurality of protrusions (some of which are indicated in Figure 8 by the reference numeral 802) which extend from the bond surface 800 (i.e. the interior surface of the wall 210, 212) into the volume 214. In this embodiment, the protrusions 802 are square-based pyramids in shape. The protrusions 802 taper from their proximal ends, to nothing at their distal ends. The protrusions 802 are contiguous over some or all of the bond surface 800. The protrusions 802 are less than or equal to about 2mm long (i.e. less than or equal to about 2mm from their proximal ends to their distal ends). More preferably, the protrusions 802 are less than or equal to about 1mm long. For example, the protrusions 802 may be about 1mm, 0.9mm, 0.8mm, 0.7mm, 0.6mm, 0.5mm, 0.4mm, 0.3mm, 0.2mm, or 0.1 mm in length. Also for example, the protrusions 802 may have lengths of less than or equal to about 0.9mm, less than or equal to about 0.8mm, less than or equal to about 0.7mm, less than or equal to about 0.6mm, less than or equal to about 0.5mm, less than or equal to about 0.4mm, less than or equal to about 0.3mm, less than or equal to about 0.2mm, or less than or equal to about 0.1 mm. The protrusions may have a minimum length of about 0.9mm, 0.8mm, 0.7mm, 0.6mm, 0.5mm, 0.4mm, 0.3mm, 0.2mm, 0.1 mm, 0.09mm, 0.075mm, 0.005mm or 0.0025mm. The protrusions have a maximum width of less than or equal to about 1mm, i.e. the size of a side of the base of a square-based pyramid protrusion 802 is less than or equal to about 1 mm. For example, the base of a protrusion 802 may be about 1mm, 0.9mm, 0.8mm, 0.7mm, 0.6mm, 0.5mm, 0.4mm, 0.3mm, 0.2mm, or 0.1 mm. Also for example, the protrusions 802 may have base widths of less than or equal to about 0.9mm, less than or equal to about 0.8mm, less than or equal to about 0.7mm, less than or equal to about 0.6mm, less than or equal to about 0.5mm, less than or equal to about 0.4mm, less than or equal to about 0.3mm, less than or equal to about 0.2mm, or less than or equal to about 0.1 mm.

The protrusions 802 are located on bond surfaces 800 of the first member 106, i.e. those surfaces that are in contact with and bonded to the stiffening structure 202. Advantageously, the protrusions 802 tend to provide an increased surface area for the bond surfaces 800, and act as a 'key' or promoter between the first members 106 and the stiffening structure 202. Thus, improved bond strength between the first members 106 and the stiffening structure 202 tends to be provided.

Thus, an aircraft door assembly is described. What will now be described is a process for fabricating the aircraft door assembly.

Figure 9 is a process flow chart showing certain steps of an embodiment of a method of fabricating the aircraft door assembly described in more detail earlier above with reference to Figures 2-8.

At step s2, the door panel 200 is produced.

The door panel 200 may be produced in any appropriate way. For example, in some embodiments uncured composite material (e.g. in the form of multiple sheets of carbon fibres that have been pre-impregnated with thermoplastic polymer matrix material) is laid against a mould surface of an aircraft door panel mould tool and secured thereon. The mould surface of the aircraft panel mould tool may be the same as a desired OML for the aircraft door 102. The aircraft door panel mould tool and the uncured composite material thereon may then be heated, e.g. in an autoclave, to form the composite material against the mould surface. Thereafter, the composite material is allowed to cool, resulting in the CFC door panel 200.

At step s4, the stiffening structure 202 is produced.

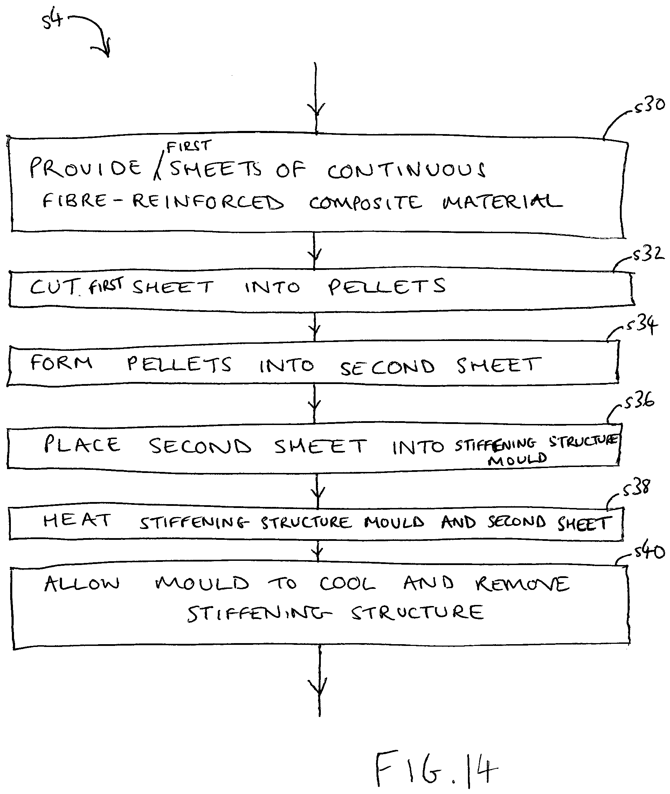

The process of producing the stiffening structure 202 is described in more detail later below with reference to Figure 14.

At step s6, the first members 106 are produced.

In this embodiment, the first members 106 are produced using an Additive Manufacturing (AM) process, which may, for example, comprise constructing the first members 106 in layers from a powdered alloy, such as a titanium alloy. Examples of AM process that may be implemented include, but are not limited to, binder jetting, directed energy deposition, material extrusion, material jetting, powder bed fusion, sheet lamination, and vat photopolymerization.

The protrusions 802 may be formed on some or all of the bond surfaces 800 of the first members 106 by any appropriate process, for example, as part of the AM process, or by a subsequent knurling process. Preferably, the protrusions are formed by an AM process.

At step s8, the first members 106 are plasma treated. In this embodiment, at least the bond surfaces 800 of the first members 106 (i.e. the interior surfaces of the top and side walls 210, 212) undergo plasma treatment to prime the bond surfaces 800 for better acceptance of, and bonding to, the stiffening structure 202. However, in other embodiments, such plasma treatment may be omitted.

At step s10, the first members 106 are placed into a first door assembly tool.

At step s12, a bond compound is applied to the bond surfaces 800 of the first members 106. In this embodiment, the bond compound is a powdered polymer. Preferably, the bond compound is a thermoplastic polymer, and more preferably, the same polymer as that comprised in the door panel 200 and the stiffening structure 202, which may be a thermoplastic polymer such as a PAEK.

In this embodiment, the thickness of the layer of bond compound is less than the lengths of the protrusions, for example less than about 0.5mm.

At step s14, the stiffening structure 202 is placed into the first door assembly tool.

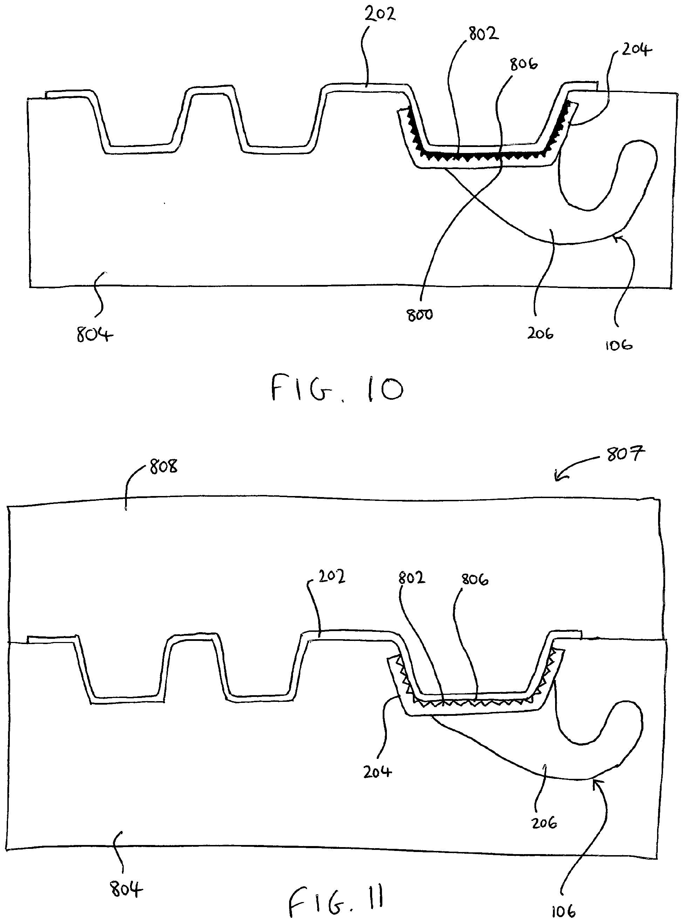

Figure 10 is a schematic illustration (not to scale) showing the first door assembly tool 804 with the first members 106 and stiffening structure 202 located therein.

In this embodiment, the first members 106 and the stiffening structure 202 are placed in appropriately shaped recesses in the first door assembly tool 804, thereby to hold the first members 106 and the stiffening structure 202 in fixed relative positions. In particular, the stiffening structure 202 is positioned such that a H-shaped portion of the stiffening structure 202 lies in the H-shaped volume 214 defined by the walls of the 212, 214 of the base portion 208, and such that it contacts with all of the bond surfaces 800, and the bond compound 806 applied thereto. The bond compound 806 is sandwiched between the bond surfaces 800 and the stiffening structure 202. Since the size and shape of the volume 214 is substantially the same as the portion of the stiffening structure 202 that is located inside the volume 214, the stiffening structure 202 fits snuggly in the volume 214, and tends to press against the protrusions 802. Advantageously, the tapered side walls 202b of the stiffening structure 202, and the tapered side walls 212 of the base portion 204 facilitate pressing of the stiffening structure into the base portion 204 such that it occupies the volume 214.

Advantageously, the protrusions 802 having relatively short lengths (i.e. the protrusions 802 being less than or equal to about 2mm long, or more preferably less than or equal to about 1 mm long) tends to provide that the stiffening structure 202 is not impeded from being press fitted in to the volume 214. Also, the likelihood of protrusions 802 breaking, i.e. snapping off, tends to be reduced compared to if longer protrusions or pins were present on the bond surfaces.

At step s16, a second door assembly tool is pressed onto the stiffening structure (i.e. onto the upper surface of the assembly shown in Figure 10), and the resulting assembly (which is hereinafter referred to as the "first assembly") is heated.

Figure 11 is a schematic illustration (not to scale) showing the first assembly 807, i.e. the second door assembly tool 808 pressed over the first door assembly tool 804 and the items located therein.

In this embodiment, a tool surface of the second door assembly tool 808 has the same shape as the desired shape of the interior surface of the stiffening structure 202. The first door assembly tool 804 and the second door assembly tool 808 are pressed together, thereby forcing the stiffening structure 202 and the first members 106 against each other.

In this embodiment, the first assembly 807 is heated, for example, to a temperature that is between the glass transition temperature and the melting point of the thermoplastic polymer that forms the bond compound 806 and the polymer matrix of the stiffening structure 202. For example, the first assembly 807 may be heated to a temperature that is greater than about 100°C and less than about 400°C, greater than about 120°C and less than about 375°C or greater than about 140°C and less than about 350°C e.g. about 100°C, 150 °C, 200°C, 250°C, 260°C, 270°C, 280°C, 290°C, 300°C, 305°C, 310°C, 320°C, 325°C, 330°C, 335°C, 340°C, 350°C, 360°C or 370 °C. For example, in the specific case where the thermoplastic polymer is PEEK, the first assembly 807 may be heated to a temperature that is greater than about 143°C and less about 343°C, e.g. about 250°C, 260°C, 270°C, 280°C, 290°C, 300°C, 305°C, 310°C, 320°C, 325°C, 330°C, 335°C, or about 340°C. Preferably, in the case where the thermoplastic polymer is PEEK (for example basic grade PEEK), the first assembly 807 is heated to about 280°C-320°C or 290°C-310°C, preferably 300°C-310°C, most preferably to about 304°C-306°C, for example to about 305°C. However, some high temperature (high grade) PEEK materials may be heated to a higher temperature.

The heated thermoplastic polymer is in its plastic state, i.e. a state in which the thermoplastic polymer is plastic, e.g. is capable of being plastically deformed, shaped or moulded.

The heating of the thermoplastic polymer causes the thermoplastic polymer to become more pliable, mouldable, or softer than it was before it was heated.

The combination of heat and pressure applied to the stiffening structure 202, bond compound 806, and first members 106 tends to cause the thermoplastic polymer of the stiffening structure 202 and the bond compound 806 to fuse (i.e. weld) together. For example, the thermoplastic polymer of the stiffening structure 202 and the bond compound may flow into each other and mix, at least to some extent. Also, this combination of heat and pressure tends to cause the thermoplastic polymer to mould to the shape of, and/or to flow between, the protrusions 802 on the bond surfaces 800.

The thermoplastic polymer of the stiffening structure 202 is capable of being moulded or plastically deformed (or of flowing plastically) at a temperature much lower than the melting point of the titanium alloy first member 106. Thus, the first member 106 tends not to be deformed by the heating process performed at step s16.

After heating the first assembly 807 for a sufficient time to cause the thermoplastic polymer of the stiffening structure 202 and the bond compound 806 to fuse together (which may be any appropriate time, for example, an about 2-3 hour ramp up, an about 2 hour dwell, and an about 2 hour drop), the first assembly 807 may be allowed to cool, thereby causing the thermoplastic polymer to harden or solidify. This advantageously tends to provide a strong, fastenerless attachment between the stiffening structure 202 and first members 106.

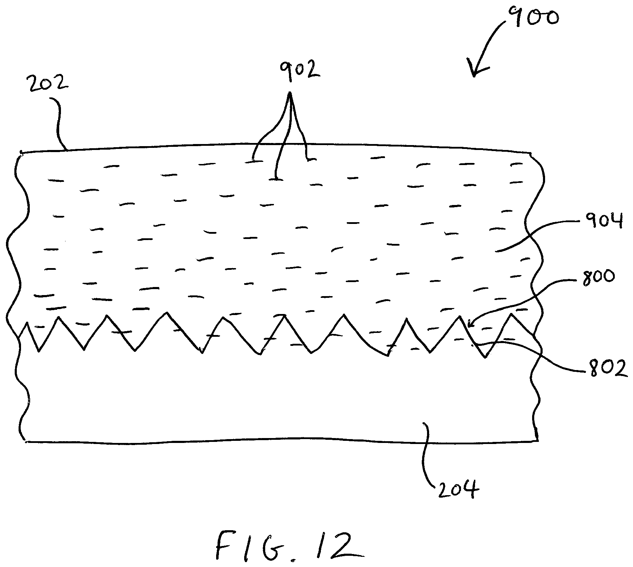

Figure 12 is a schematic illustration (not to scale) showing further details of the fastenerless join structure 900 between the stiffening structure 202 and the first members 106 produced at step s16.

The stiffening structure 202 comprises relatively short carbon fibres 902 embedded in the thermoplastic polymer matrix 904.

In this embodiment, the polymer matrix 904 is formed against the entire bond surface 800. The polymer matrix 904 contacts the surfaces of the protrusions 802 and also occupies spaces between the protrusions 802.

In this embodiment, the thickness of the bond compound applied at step s12 is less than the lengths of the protrusions, for example less than about 0.5mm. Thus, the protrusions 802 extend into the region of the polymer matrix 904 of the stiffening structure 202 in which the short fibres 902 are present. Advantageously, the short lengths of the fibres (e.g. less than or equal to about 50mm) tends to allow the fibres 902 to move or flow around the protrusions 802 when the first assembly is heated (at step s16). Thus, certain short fibres 902 tend to be positioned within the polymer matric 904, and are positioned around/in-between the protrusions 802. This advantageously tends to provide a strong bond between the stiffening structure 202 and first members 106.

Advantageously, the relatively short lengths of the protrusions 802 tends to provide that the cross sectional thickness of the stiffening structure 202 at the locations of the protrusions 802 is not significantly reduced. Use of longer protrusions or pins on the bonding surfaces 800 would tend to reduce the thickness of the stiffening structure 202 at the locations of those longer protrusions or pins, thereby introducing points of structural weakness into the stiffening structure 202. This tends to be avoided in the above described fastenerless join structure 900.

Returning to the description of Figure 9, at step s18, the second door assembly tool 808 is removed from the first assembly 807, bond compound 806 is then applied to the surfaces of the stiffening structure 202 that are to be fixed to the door panel 200 (i.e. the flange 202c), and the door panel 200 (produced at step s2) is placed into the first door assembly tool 804, onto the stiffening structure 202.

At step s20, a third door assembly tool is pressed onto the door panel 200, and the resulting assembly (which is hereinafter referred to as the "second assembly") is heated.

Figure 13 is a schematic illustration (not to scale) showing the second assembly 810.

The bond compound 806 is sandwiched between the door panel 200 and the surfaces of the stiffening structure 202 that are to be fixed to the door panel 200.

In this embodiment, a tool surface of the third door assembly tool 812 has the same shape as the desired shape of the outer surface of the door panel 200, i.e. the OML of the aircraft 100. The first door assembly tool 804 and the third door assembly tool 812 are pressed together, thereby forcing the stiffening structure 202 and the door panel 200 against each other.

In this embodiment, the second assembly 810 is heated to a temperature that is between the glass transition temperature and the melting point of the thermoplastic polymer that forms the bond compound 806 and the polymer matrix of the stiffening structure 202 and door panel 200. For example, the second assembly 810 may be heated to a temperature that is greater than about 100°C and less than about 400°C, greater than about 120°C and less than about 375°C or greater than about 140°C and less than about 350°C e.g. about 100°C, 150 °C, 200°C, 250°C, 260°C, 270°C, 280°C, 290°C, 300°C, 305°C, 310°C, 320°C, 325°C, 330°C, 335°C, 340°C, 350°C, 360°C or 370 °C. Preferably, the second assembly 810 is heated to about 280°C-320°C or 290°C-310°C, preferably 300°C-310°C, most preferably to about 304°C-306°C, for example to about 305°C.

The combination of heat and pressure applied to the stiffening structure 202, bond compound 806, and door panel 200 tends to cause the thermoplastic polymer of the stiffening structure 202, bond compound 806, and door panel 200 to fuse (i.e. weld) together.

After heating the second assembly 810 for sufficient time to cause the thermoplastic polymer of the stiffening structure 202, bond compound 806, and door panel 200 to fuse together (which may be any appropriate time, for example, an about 2-3 hour ramp up, an about 2 hour dwell, and an about 2 hour drop), the second assembly 810 may be allowed to cool, thereby causing the thermoplastic polymer to solidify. This advantageously tends to provide a strong bond between the stiffening structure 202 and door panel 200.

At step s22, the fixed together door panel 200, stiffening structure 202, and first members 106 (i.e. the assembled together door assembly) are removed from the door assembly tools 804, 812.

Advantageously, the tapered side walls 202b of the stiffening structure 202 tend to facilitate removal of the door assembly from the door assembly tool 804.

Thus, an embodiment of a method of fabricating the aircraft door 102 is provided.

Returning now to the description of step s4, Figure 14 is a process flow chart showing certain steps of a process of producing the stiffening structure 202 performed at step s4.

At step s30, a continuous fibre-reinforced thermoplastic composite material is provided, preferably in the form of one or more sheets or panels which are hereinafter referred to as "first sheets". The continuous fibre-reinforced thermoplastic composite material is a composite material that comprises (e.g. high-performance or aerospace grade) continuous carbon fibres that are embedded in a matrix of thermoplastics, such as a PAEK (e.g. PEEK). As noted earlier above, the terminology "continuous fibres" is used herein to refer to long fibres of length greater than 50mm.

The continuous fibre-reinforced thermoplastic composite material may be a layered or laminated structure. The continuous fibres may be arranged in any appropriate form including, but not limited to, unidirectional arrangement, plain weave, harness satin weave, braided, and stitched.

At step s32, the one or more first sheets are cut into relatively small pieces or "pellets". Thus, the first sheets may be considered to be "pelletised". Preferably, the one or more first sheets are cut in multiple different directions, more preferably in two directions which extend essentially perpendicular to each other. Preferably, the pellets into which the one or more first sheets are cut have a longest dimension of less than or equal to about 25mm, e.g. in the range of about 0-5mm, in the range of about 5-10mm, in the range of about 10-15mm, in the range of about 15-20mm, or in the range of about 20-25mm. The pellets into which the one or more first sheets are cut tend to comprise relatively short carbon fibres, or discontinuous carbon fibres. The terminology "discontinuous fibres" and "short fibres" is used herein to refer to short fibres having a length of less than or equal to about 50mm.

At step s34, the pellets produced at step s32 are moulded into a substantially flat sheet, thereby forming a sheet of short fibre-reinforced thermoplastic composite material, which is hereinafter referred to as a "second sheet".

The second sheets may be formed by any appropriate process, including for example one of placing the pellets into a mould, heating the pellets (e.g. to a temperature above the melting point of the thermoplastic polymer, or to a temperature between the glass transition temperature and the melting point of the thermoplastic polymer) to cause the pellets to agglomerate and form to the shape of the mould cavity, and thereafter allowing the material to cool and harden before removing the second sheet from the mould.

At step s36, the substantially flat second sheet is placed into a stiffening structure mould, i.e. a mould having a mould cavity substantially the same shape as the desired shaped for the stiffening structure 202.

At step s38, the stiffening structure mould and second sheet therein is heated, and the stiffening structure mould applies pressure to the second sheet to form the second sheet into the desired shape for the stiffening structure 202.

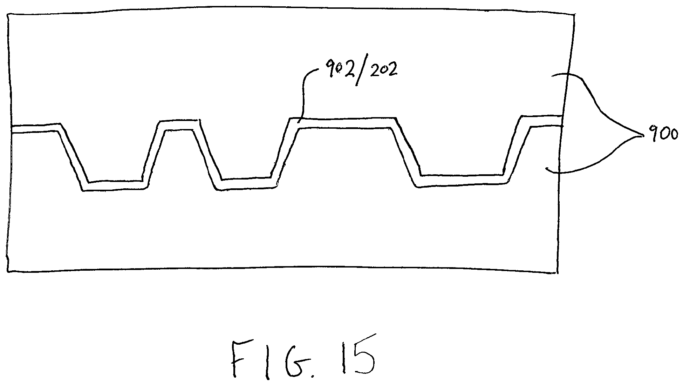

Figure 15 is a schematic illustration (not to scale) showing the stiffening structure mould 900 and second sheet 902 therein.

In this embodiment, to press form the second sheet into the desired shape thereby forming the stiffening structure 202, the stiffening structure mould 900 and second sheet 902 therein is heated to a temperature that is between the glass transition temperature and the melting point of the thermoplastic polymer comprised in the second sheet 902. For example, the stiffening structure mould 900 and second sheet 902 therein may be heated to a temperature that is greater than about 100°C and less than about 400°C, greater than about 120°C and less than about 375°C or greater than about 140°C and less than about 350°C e.g. about 100°C, 150 °C, 200°C, 250°C, 260°C, 270°C, 280°C, 290°C, 300°C, 305°C, 310°C, 320°C, 325°C, 330°C, 335°C, 340°C, 350°C, 360°C or 370 °C. Preferably, the stiffening structure mould 900 and second sheet 902 therein are heated to about 280°C-320°C or 290°C-310°C, preferably 300°C-310°C, most preferably to about 304°C-306°C, for example to about 305°C.

The combination of heat and pressure applied to the second sheet 902 tends to form the second sheet 902 into the desired shape of the stiffening structure 202. Advantageously, the relatively short carbon fibres in the second sheet 902 tend to facilitate the second sheet 902 being press formed into the relatively complex desired shape for the stiffening structure 202, compared to if the second sheet comprised longer (e.g. continuous) fibres. Furthermore, use of the short fibre reinforced composite material of the second sheet 902 tends to facilitate production of the stiffening structure as a single, monolithic piece, thereby reducing assembly time, assembly errors, costs, and increasing part accuracy.

In some embodiments, the second sheet is heated away from the stiffening structure mould, and subsequently brought to the stiffening structure mould where it is press formed into the desired shape for the stiffening structure.

At step s40, the stiffening structure 202 is allowed to cool and harden in the stiffening structure mould 900, and thereafter removed from the stiffening structure mould 900.

Advantageously, the tapered side walls 202b of the stiffening structure 202 tend to facilitate removal of the stiffening structure 202 from the stiffening structure mould 900.

Thus, a process of producing a stiffening structure 202 is provided.

Advantageously, the short fibre-reinforced CFC material from which the stiffening structure is made tends to be recyclable. This tends to facilitate repair and maintenance of the stiffening structure and allows for material recovery. Furthermore, the short fibre-reinforced CFC material from which the stiffening structure is made may be produced, as described above, from continuous-reinforced CFC material. Thus, costs tend to be reduced.

When the above described door assembly is in use on the aircraft 100, the fastenerless join structure tends to experience shear stresses, for example shear stresses that act to attempt to cause the sidewalls 212 of the base portion 204 and the side walls 202b of the stiffening structure 202 (which substantially parallel internal surfaces of the fastenerless join structure and are bonded together) to slide past each other. Advantageously, the above described fastenerless join structure tends to have particularly high shear strength to this type of shear force. This high shear strength may result at least in part from the protrusions 802 located on the bond surfaces of the sidewalls 212 of the base portion 204, and the thermoplastic polymer formed against those protrusions 802. Also, this high shear strength may result at least in part from the large surface area of the surfaces that experience shear forces in use (i.e. the relatively large surface area of the bond surfaces 800 of the sidewalls 212 of the base portion 204, and the surface area of the stiffening structure 212 bonded to those bond surfaces 800).

Advantageously, the H-shape of the base portion 204 tends to provide that the base portion 204 is compact (i.e. its size is limited in multiple different dimensions), while still providing the large surface area of the surfaces that experience shear forces in use. This compact size of the base portion tends to facilitate production of the first members, for example by AM machines having limited build volumes.

Furthermore, the H-shape of the base portion 204 tends to provide walls that are oriented in multiple different directions. This advantageously tends to provide that the fastenerless join structure is capable of withstanding twisting moments. In use, the top surfaces 210 of the base portions 204 tend to transfer loads to the side walls 212 of the base portions 204.

Advantageously, the above described fastenerless join structure tends to provide that no, or a reduced number of mechanical fasteners are used in the door assembly. This tends to reduce the overall weight of the door assembly, and also may speed up assembly time.

Advantageously, the above described fastenerless join structure tends to facilitate repair and maintenance of the door assembly. For example, in the event that a hinge assembly requires repair or replacement, the relevant first member may relatively easily be removed from the aircraft door by melting the thermoplastic polymer bonded to that first member. The first member may then be repaired and replaced.

Advantageously, damage tolerance tends to be improved by using thermoplastics, which tend to be less brittle than thermosetting materials.

It should be noted that certain of the process steps depicted in the flowchart of Figures 9 and 14 and described above may be omitted or such process steps may be performed in differing order to that presented above and shown in Figures 9 and 14. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the fastenerless join structure used to attach the hinge to the stiffening structure does not include any mechanical fasteners (e.g. bolts, screws, nails, clamps, and rivets). Nevertheless, it will be appreciated by those skilled in the art that mechanical fasteners, including but not limited to bolts, screws, nails, clamps, and rivets, may be used in addition to the fastenerless join structure, for example to provide additional join strength. For example, in some embodiments, mechanical fasteners (e.g. rivets or so-called "chicken-rivets") may be used to attach the hinge to the stiffening structure in addition to the above described fastenerless join structure, for example to reduce the likelihood of peel.

In the above embodiments, the fastenerless join structure is implemented as part of an aircraft hinge assembly for an aircraft door. However, in other embodiments, the fastenerless join structure is implemented as part of a different system, e.g. a different join between two component parts on an aircraft or a different type of vehicle or other type of entity.

In the above embodiments, the aircraft door assembly comprises three hinge assemblies. However, in other embodiments, the aircraft door assembly comprises a different number of hinge assemblies, e.g. one, two, or more than three hinge assemblies.

In the above embodiments, the fastenerless join structure fixes together a hinge member made of a titanium alloy to an aircraft door component made of a short-fibre thermoplastic CFC. However, in other embodiments, the hinge member or a different entity is made of a different material other than the above discussed titanium alloy, for example a different type of titanium alloy (such as any of grades 1-38 titanium alloys), aluminium alloys (such as 7068, 7075, 6061, 6063, or 7050 aluminium), steel, a thermosetting polymer (such as polyester resin, vulcanised rubber, epoxy resin, silicone resins, or a combination thereof) or composite material (such as a carbon, glass, or cellulose fibre reinforced composite material, which may be either a thermoplastic or thermosetting composite material). Also for example, the aircraft door component or a different entity is made of a different material other than a short fibre thermoplastic CFC, for example a continuous fibre-reinforced composite material (which may be, e.g., either thermosetting or thermoplastic), a thermosetting short or long fibre-reinforced composite material (which may have, as a polymer matrix, polyester resin, vulcanised rubber, epoxy resin, silicone resins, or a combination thereof), or a glass-fibre or cellulose-fibre reinforced composite material.

Examples of suitable thermoplastics that may be used in the context of the present invention include, but are not limited to, acrylic, acrylonitrile butadiene styrene (ABS), nylon, polylactide (PLA) polyetherketone (PEK), polyetheretherketone (PEEK), polyetherketoneketone (PEKK), polyetheretherketoneketone (PEEKK), polyetherketoneetherketoneketone (PEKEKK), polybenzimidazole (PBI), polycarbonate (PC), polyether sulfone (PES), polyetherimide (PEI), polyethylene (PE), polyphenylene oxide (PPO), perfluoroalkoxyalkane (PFA), ethylene tetrafluroethylene (ETFE), polyphenylene sulphide (PPS), polypropylene (PP), polystyrene, polyvinyl chloride (PVC), and polymer polytetrafluoroethylene (PTFE), or any combination thereof.

In the above embodiments, the stiffening structure comprises a plurality of connected longitudinal and transverse stiffening elements arranged to form a frame. However, in other embodiments the stiffening structure has a different shape.

In the above embodiments, the stiffening structure is produced using a process described in more detail above with reference to Figure 13. However, in other embodiments the stiffening structure is produced using a different appropriate process, e.g. an injection moulding comprising melting the pellets and injecting the melted pellets into a mould.

In the above embodiments, the first member is produced using an AM process. However, in other embodiments the first member is produced using a different process, e.g. a casting or a machining process.

In the above embodiments, when viewed from above, the base portions 204 of the first members 106 are H-shaped. However, in other embodiments, when viewed from above, the base portion of one or more of the base portions is a different shape, for example, a C-shape, a S-shape, a J-shape, a L-shape, a T-shape, a U-shape, a F-shape, a X-shape etc. Preferably, the shape of the base portion is optimised so that the surface areas of the bond surface that experience shear forces in use are optimised. The stiffening structure 202 may have a shape that allows in to fit onto the base portions.

In the above embodiments, the base portion of the first member, and the stiffening structure, have tapered side walls. However, in other embodiments, the side walls are shaped differently. For example, in some embodiments the taper may be opposite to that described above. Also, in some embodiments, the side walls do not taper.

In the above embodiments, the interior surface of the walls comprises a plurality of protrusions 802 which extend into the volume 214. However, in other embodiments, protrusions are omitted from some or all of the interior surfaces of the walls. For example, in some embodiments, protrusions are only located on some or all of the interior surfaces of the side walls, and the interior surface of the top wall does not include such protrusions. In some embodiments, use of an AM process tends to provide that the bond surfaces are sufficiently rough or textured to provide an adequate bond strength.

In the above embodiments, the protrusions 802 are square-based pyramids in shape. However, in other embodiments, one or more of the protrusions is a different shape other that a square-based pyramid, for example, a triangle-based pyramid or a cone.

In the above embodiments, the protrusions 802 are contiguous over some or all of the interior surface. However, in other embodiments, some or all of the protrusions are spaced apart from other protrusions. For example, in some embodiments, the protrusions comprise spaced apart pins that extend from the inner surface of a wall into the volume.

In the above embodiments, the protrusions 802 have a base width that is less than or equal to about 1 mm. However, in other embodiments, the base width of one or more of the protrusions is a different size, for example greater than about 1mm, for example 1-1.5mm or 1.5-2mm.

In the above embodiments, in the fastenerless join structure (as shown in Figure 12, for example) the protrusions 802 extend into the region of the polymer matrix 904 in which the short fibres 902 are present. The short lengths of the fibres tend to allow the fibres to move or flow around the protrusions when the first assembly is heated. However, in other embodiments, in the fastenerless join structure, the protrusions remain spaced apart from a significant proportion, or all the carbon fibres in the polymer matrix, as will now be described.

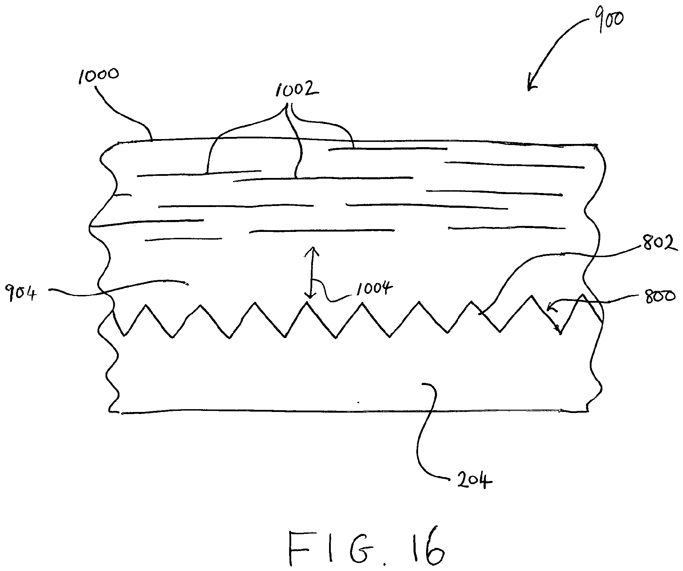

Figure 16 is a schematic illustration (not to scale) showing a fastener join structure 900 between a first member 106 and an article 1000 made of a continuous fibre-reinforced composite material.

The fastenerless join structure 900 shown in Figure 16 may be produced using the method described above with reference to Figure 9, e.g. steps s8-s22 with the door stiffening structure 202 replaced by the article 1000 made of the continuous fibre-reinforced composite material. Also, optionally, at step s12 the thickness of the bond compound applied to the bond surface 800 may be greater than the lengths of the protrusions 802. Thus, advantageously, the continuous carbon fibres 1002 in the article 100 tend to be spaced apart from most or all of the protrusions 802, as indicated in Figure 16 by a double headed arrow and the reference numeral 1004. This spacing 1004 between the carbon fibres 1002 and the protrusions 802 tends to provide that there is little or no fibre deformation or disturbance of the continuous fibres 1002 caused by the protrusions 802. Deformation or disturbance of the long fibres 1002 may result in reduced strength and/or stiffness of the long carbon fibre-reinforced composite material article 1000. This reduced strength and/or stiffness tends to be avoided in the above described fastenerless join structure 900. The protrusions 802 not extending into the polymer matrix 904 so as to deform a significant number of the fibres 1002 tends to result at least in part from the relatively short lengths of the protrusions 802 (i.e. the protrusions 802 being less than or equal to about 2mm long and more preferably less than or equal to about 1 mm long). The protrusions 802 not extending into the polymer matrix 904 so as to deform the fibres 902 may also result, at least in part, from use of the bond compound 806 applied to the bond surfaces 800, which provides that additional thermoplastic polymer is introduced between the stiffening structure and the bond surfaces so as to provide the spacing 906.

## Claims

1. A door assembly for a vehicle, the door assembly comprising:
a door;
a stiffening structure fixed to a surface of the door, the stiffening structure comprising a first wall spaced apart from and substantially parallel to the surface of the door, and first side walls extending between the first wall and the surface of the door; and
a hinge member comprising:
a base portion; and
a hinge arm extending from the base portion; wherein
the base portion comprises a second wall and second side walls extending from the second wall, the second wall and second side walls defining a volume;
at least a part of the stiffening structure is located in the volume; and
outer surfaces of the first side walls are bonded to internal surfaces of the second side walls.

2. A door assembly according to claim 1, wherein the at least a part of the stiffening structure is substantially the same size and shape as the volume in which it is located.

3. A door assembly according to claim 1 or 2, wherein an outer surface of the first walls is bonded to an internal surface of the second wall.

4. A door assembly according to any of claims 1 or 3, wherein the first side walls of the stiffening structure taper outwards from the first wall to the surface of the door.

5. A door assembly according to any of claims 1 to 4, wherein the second side walls taper outwards from the second wall to their distal edges opposite to the second wall.

6. A door assembly according to any of claims 1 to 5, wherein:
the stiffening structure comprises a plurality of connected stiffening elements oriented in multiple different directions, and
the at least a part of the stiffening structure that is located in the volume comprises a plurality of the stiffening elements oriented in multiple different directions.

7. A door assembly according to any of claims 1 to 6, wherein the second wall has a shape selected from the group of shapes consisting of: a H-shape, a I-shape a C-shape, a S-shape, a J-shape, a L-shape, a T-shape, a U-shape, a F-shape, and a X-shape.

8. A door assembly according to any of claims 1 to 7, wherein the stiffening structure comprises a thermoplastic fibre-reinforced composite material.

9. A door assembly according to any of claims 1 to 8, wherein the stiffening structure comprises a short fibre-reinforced composite material comprising short fibres embedded in a polymer matrix, the short fibres having lengths of less than or equal to 50mm.

10. A door assembly according to any of claims 1 to 9, wherein the internal surface of a second side wall and/or an internal surface of the second wall comprises one or more protrusions that extend into the stiffening structure.

11. A door assembly according to claim 10, wherein the each of the one or more protrusions has a length of less than or equal to 1 mm.

12. A door assembly according to any of claims 1 to 11, wherein the hinge member is a metal or alloy hinge member produced using an Additive Manufacturing process.

13. A door assembly according to any of claims 1 to 12, wherein the vehicle is an aircraft and the door is an aircraft door.

14. A vehicle comprising a door assembly according to any of claims 1 to 13.

15. A method for fabricating a door assembly for a vehicle, the method comprising:
providing a stiffening structure, the stiffening structure comprising a first wall and first side walls extending from the first wall;
providing a hinge member comprising a base portion and a hinge arm extending from the base portion, the base portion comprising a second wall and second side walls extending from the second wall, the second wall and second side walls defining a volume;
locating at least a part of the stiffening structure in the volume;
bonding outer surfaces of the first side walls to internal surfaces of the second side walls; and
fixing the stiffening structure to a surface of the door such that the first wall is spaced apart from and substantially parallel to the surface of the door, and first side walls extend between the first wall and the surface of the door.
